Europäisches Patentamt

European Patent Office

Office européen des brevets

(11) Publication number: **0 309 179**
A1

## (12) EUROPEAN PATENT APPLICATION

(21) Application number: **88308665.4**

(22) Date of filing: **19.09.88**

(51) Int. Cl.⁴: **F16L 19/08 , F16L 17/02 , F16L 15/04**

(30) Priority: **21.09.87 US 99183**

(43) Date of publication of application:
**29.03.89 Bulletin 89/13**

(84) Designated Contracting States:
**DE FR GB IT**

(71) Applicant: **PARKER HANNIFIN CORPORATION**
**17325 Euclid Avenue**
**Cleveland Ohio 44112(US)**

(72) Inventor: **Patel, Hiralal V.**
**7155 Fenian Court**
**Dublin Ohio 43017(US)**

(74) Representative: **Purvis, William Michael Cameron et al**
**D. Young & Co. 10 Staple Inn**
**London WC1V 7RD(GB)**

(54) **Tube fitting.**

(57) A fitting (10) to join a tube (15) to a threaded body member (14) includes a nut (12) having a conical camming surface (28) and a collapsible sleeve (11) with a mating conical surface (41) and internal annular serrations (44, 45) to grip the tube (15). A seal in the face of the body member seals against a front transverse shoulder (36) of the sleeve while an internal groove (50) in the sleeve houses an o-ring (55) to seal against the tube (15). The rear wall (52) of the groove is in a dogleg (58) configuration and is engaged with the rear end (40) of the sleeve (11) to be collapsed therewith into close engagement and embedment with the tube (15) to prevent extrusion of the o-ring (55) at high pressures. The sleeve (11) includes stop shoulders (36, 38) thereon to limit threaded engagement of the nut and thus the collapse of the sleeve and may be in one or in two pieces.

Fig. 1

## "TUBE FITTING"

The invention relates to a tube fitting.

Tube fittings of deformable sleeve kind have been previously proposed and the invention has particular application to high pressure face seal kinds of such fittings in which the sleeve combines the mechanical grip of bite edges with the sealing efficiency of an elastomeric seal.

High pressure fittings of this kind are shown in Patent Specification US-A-4,529,231 wherein a flat face tube connector has a face seal between a connector sleeve and a body to be sealed and a plurality of radially projecting annular serrations can be compressed into fluid sealing engagement with the periphery of a tube and can supply the mechanical grip thereon as well. An elastomeric seal is described in this kind of fitting for backup purposes but it is suggested that the seal is not necessary since a metal to metal seal is achieved at the gripping serrations. The elastomeric seal is urged under fluid pressure to the narrow end of a recess in the sleeve and co-operates with the embedded gripping serrations to prevent fluid leakage. It has been determined that this kind of fitting does not provide a reliable fluid seal since the elastomeric seal does not consistently move to the narrow end of the internal recess and since the gripping serrations do not provide a reliable fluid seal in and of themselves as suggested in the disclosure.

Another form of fitting which combines mechanical grip means and an elastomeric seal is shown in Patent Specification US-A-2,466,527 wherein a cutting edge at the rearward end of the sleeve is forced into biting engagement with the tube to provide a mechanical grip while an elastomeric seal is trapped in a recess at the forward end of the sleeve between the body member to be sealed and the inserted tube. A stop device is also shown in this design of fitting to control the axial interengagement between the nut and body member and thus the penetration of the cutting edge of the sleeve. However, this design of fitting is not particularly suited for high pressure applications since the rearward wall of the recess entrapping the elastomeric seal is sized for a free fit of the tubing therein leaving a gap through which the seal can extrude at high pressure levels.

A variation of this kind of fitting is shown in Patent Specification US-A-3,687,494 wherein the forward cutting edge of the sleeve is forced into the periphery of the tube surface by a conical camming member while the rear end of the sleeve includes a recess closely conforming to the configuration of the entrapped elastomeric seal. This recess becomes deformed to a more open condition as the seal is compressed upon threaded engagement of the nut. Again, this kind of fitting is not especially suited for high fluid pressure levels as little attention is directed to closure of the rear end of the recess of the sleeve, thereby allowing potential extrusion of the seal therethrough.

A similar form of fitting is shown in Patent Specification, US-A-3,025,084 which again includes the combination of a biting edge of a deformable sleeve member, and an entrapped elastomeric seal. This fitting also describes deformation of the annular recess containing the elastomeric seal in forcing the seal against the outer periphery of the tube. However, again, space must be provided between the rear end of the sleeve and the externally threaded nut to allow clearance for insertion of the tube therein, and this provides a path for extrusion of the elastomeric seal.

One form of fitting which separates portions of a sleeve by a deformable bridge section is shown in Patent Specification US-A-2,693,374. In this design of fitting, a face seal is effected at the forward end of the sleeve while a gripping edge is forced into the tube surface by means of a camming conical surface in the nut. An intermediate bridge section is deformed into engagement with the periphery of the tube and serves to confine the ridge formed by the cutting edge to provide a secure mechanical grip upon the tube combined with a fluid seal at that location. This kind of fitting does not employ elastomeric seals at either the face seal location or within the recess of the sleeve at the bridge location.

According to one aspect of the invention there is provided a fitting to join a thin wall tube to a threaded body member having an axial bore therein, comprising

a nut having threads thereon disposed at the forward end thereof for engagement with the threads of the body member to draw the nut and body member axially together,

a bore in the nut to receive the tube,

a conical surface in the nut adjacent the rear end thereof and opening forwardly,

a recessed surface in the nut forwardly of the conical surface,

a sleeve for placement on the tube, the sleeve having a conical exterior surface at the rearward end thereof received in the conical surface of the nut and to be collapsed onto the tube upon threaded engagement of the nut on the body member, and

bite means at the rearward end of the sleeve for biting engagement with the tube to restrain rearward movement of the tube,
characterised by an annular head at the forward end of the sleeve in engagement with the body member,
an internal annular recess in the sleeve head,
a seal disposed in the sleeve recess and engageable with the external periphery of the tube, and
a dogleg in the sleeve between the conical surface and the head, the dogleg being deformable into engagement with the peripheral surface of the tube as the nut is threaded upon the body member, to prevent extrusion of the seal rearwardly of the dogleg.

According to another aspect of the invention there is provided a fitting to attach a tube to a threaded body member having a central axis and a flat seal face substantially perpendicular to the axis, characterised by
a sleeve having a front shoulder thereon substantially perpendicular to the axis and engageable with the seal face of the body member,
a face seal disposed in a groove in the seal face to seal against the shoulder,
a bore in the sleeve shoulder to receive the end of the tube to be attached to the body member,
a rear shoulder on the sleeve spaced rearwardly of the front shoulder,
an inner annular groove in the sleeve between the shoulders, the groove having a front wall and a collapsible rear wall, the rear wall being sized initially freely to receive the tube and to be substantially radially collapsed into tight engagement with the tube,
an annular elastomeric seal in the groove,
a rear section on the sleeve having an external conical surface thereon,
gripping means on the sleeve rear section internally of the conical surface, the rear section of the sleeve being collapsible onto the tube,
means joining the rear section and the rear wall of the groove to transmit collapsing movement of the rear section of the sleeve to the rear wall, and
a nut threaded onto the body member to secure the tube to the body member, the nut having an internal conical surface at the rearward end thereof engageable with the sleeve conical surface to collapse the rear section of the sleeve and the rear wall of the groove as the nut is threaded on the body member and axially moved relative theretowards.

Thus the sleeve of the fitting includes separated grip and seal sections with a deformable connector device therebetween which establishes a firm engagement with the periphery of the tube to be sealed independently of the gripping edges of the sleeve.

In a unitary sleeve embodiment of the invention the sleeve includes a front shoulder having a flat sealing face thereon which engages a similar face of a body member to be sealed, the body member including an annular groove and face seal therein. The sleeve is drawn into firm engagement with the body member and with the tube by means of a threaded nut having an internal conical camming surface therein. This surface co-operates with an external conical surface at the rearward end of the sleeve radially to collapse the sleeve and urge the gripping edges at the rearward end thereof into biting engagement with the tube. The front and rear sections of the sleeve, providing respectively the sealing and gripping functions, are joined by means of a dogleg connector, which dogleg is deformable into tight frictional engagement with the exterior surface of the tube. An internal groove is included in the front section of the sleeve and houses an elastomeric o-ring to provide the fluid sealing function. The connector which, upon deformation into engagement with the tube, provides a secure entrapment for the elastomeric seal. The front section of the sleeve further includes a rear shoulder which co-operates with an internal shoulder in the nut to provide a positive stop for engagement of the nut upon the body member, and thus a control upon the depth of penetration of the sealing edges. In this configuration, the gripping edges of the sleeve are not relied upon for creating a fluid seal with the tube periphery and could be interrupted in circumferential extent in order to achieve a better gripping action. This is possible since the fluid seal is achieved at the front section at a position displaced from the gripping edges.

A second embodiment of the invention has the gripping and seal sections of the sleeve as two separate pieces with the gripping sectin having a forward portion which overlaps the dogleg connector of the seal section and further engages the rearward stop shoulder of the seal section. In this embodiment collapse of the grip section and its cutting edges onto the tube surface acts in a similar manner to deform the dogleg section into a closed rearward wall in tight engagement with the periphery of the tube to prevent extrusion of the elastomeric seal therethrough under high fluid pressure conditions.

The invention is diagrammatically illustrated by way of example in the accompanying drawings, in which:-

Figure 1 is a partial sectional view of a first embodiment of a fitting according to the invention after initial assembly but prior to tightening of a nut on a body member;

Figure 2 is a partial sectional view of the embodiment of Figure 1 shown in the fully assembled condition; and

Figure 3 is a partial sectional view of a second embodiment of a fitting according to the invention shown in a partially assembled condition prior to tightening of a nut on a body member.

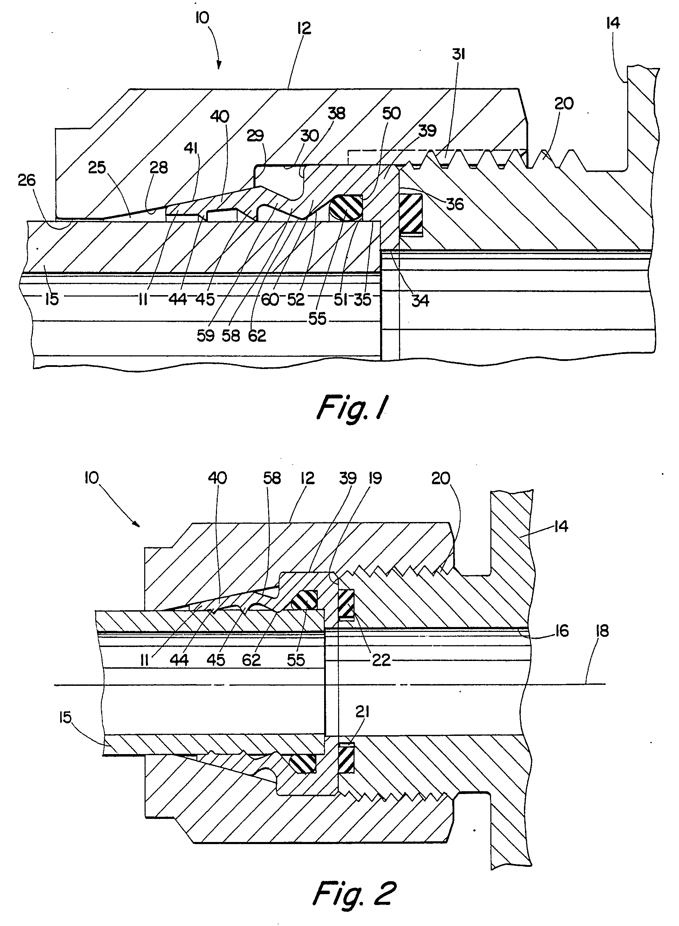

Referring to the drawings and firstly to Figures 1 and 2, a tube fitting 10 comprises a sleeve 11 and a nut 12 which can be threaded onto a body member 14 to secure a tube 15 thereto. As shown in Figure 2, the body member 14 includes a central bore 16 with an axis 18 and a transverse seal face 19. The outer periphery of the body member 14 includes external threads 20 thereon, while the seal face 19 includes a concentric annular groove 21 which contains an annular seal 22 therein. The seal face 19 is preferably perpendicular to the axis 18 and the seal 22 is preferably a lathe cut elastomeric seal normally having an axial dimension greater than the depth of the groove 21 so as to project from the sealing face 19 and to be compressed in the groove 21 upon being engaged by adjacent structure. The seal 22 is typically described as a face seal for the body member 14.

The nut 12 includes a bore 25 extending the length thereof, having a reduced support section 26 at the rearward end thereof and of substantially the same diameter as that of the tube 15. The nut 12 further includes an internal conical cam surface 28 therein adjacent the support section 26, which cam surface flares outwardly and forwardly of the support section 26. The cam surface 28 is preferably at an angle of approximately 12° to the axis 18 and extends slightly less than half of the overall length of the nut 12 to an outwardly extending stop shoulder 29, which itself terminates at a recessed cylindrical surface 30. The recessed surface 30 extends to the forward end of the nut 12 and includes threads 31 at the forward end which are engageable with the threads 20 of the body member 14. Thus it will be clear that the nut 12 may be rotated relative to the body member 14 to draw the nut 12 and the body member 14 together to the fully engaged position depicted in Figure 2.

In the embodiment of Figures 1 and 2, the sleeve 11 is a unitary member of generally tubular configuration having a central bore 34 extending the full axial length thereof, with a short counterbore 35 at the forward end. The sleeve 11 includes a front shoulder 36 and an axially spaced rear shoulder 38, both of which are disposed substantially perpendicularly to the axis 18. The cylindrical portion of the sleeve 11 between the front and rear shoulders 36, 38 comprises a head section 39, being sized so to be slidably receivable within the recessed surface 30 of the nut 12.

The rear end of the sleeve 11 is formed as a conical section 40 having an exterior conical surface 41 and first and second internal bite edges 44, 45. These edges are internal annular projections axially spaced adjacent one another and near the rearward end of the sleeve 11 on the internal periphery of the conical section 40. While the bite edges 44, 45 are preferably continuous annular ridges, the edges may be interrupted at various circumferential locations inasmuch as the fluid sealing effectiveness at this location is not significant to the proper operation of the fitting.

The sleeve 11 further includes an inner annular groove 50 in the head section 39 and spaced generally centrally between the front and rear shoulders 36, 38. The groove 50 includes a perpendicular forward wall 5 and a rearwardly spaced, angled rear wall 52 with an intermediate bottom wall which is sized so that it can receive an 0-ring seal 55 in a manner such that the seal 55 normally projects beyond the wall forming the counterbore 35 and is slightly deformed by insertion of the tube 15 into the counterbore 35.

The sleeve 11 further includes a dogleg section 58 between the head section 39 and the conical section 40. The dogleg section 58 comprises an outwardly rearwardly flared conical section 59 and an outwardly forwardly flared conical section 60 with an elbow intersection 62 therebetween. The inner periphery of the sleeve 11 at the elbow 62 is a smoothly curved intersection surface with a generous radius. The rear conical section 59 is generally of uniform radial thickness between the intersection 62 and the sleeve conical section 40 while the forward conical section 60 of the dogleg 58 becomes radially thickened forwardly of the intersection 62 and blends into the perpendicular rear shoulder 38 at the outer periphery and into the angled rear wall 52 of the groove 50 at the inner periphery and into the angled rear wall 52 of the groove 50 at the inner periphery of the sleeve 11. In the partially assembled view of Figure 1, the rear wall 52 of the groove 50 extends at an angle of approximately 40° with respect to the axis 18 while the rear conical section 59 of the dogleg 58 extends rearwardly at an angle of approximately 25°.

The head section 39 of the sleeve 11 thus forms a front seal section while the conical section 40 serves as a rear grip section with the sections being joined or connected by the dogleg section 58. As shown in Figure 1, the intersection surface 62 of the sleeve 11 is sized to be spaced a slight distance from the outer periphery of the tube 15 so that the tube 15 may be freely inserted into the counterbore 35. Similarly, the first and second bite edges 44, 45 are dimensioned so that their tips are free of the tube 15. Upon further threaded engagement of the nut 12 with respect to the body member 14, the nut 12 will be moved to the right as viewed in Figures 1 and 2 to the final position depicted in Figure 2. During this movement, the conical cam surface 28 of the nut engages the sleeve conical surface 41 to collapse the rearward end of the sleeve 11 in a substantially solely radial direction forcing the cutting edges 44, 45 to penetrate into outer periphery of the tube 15 to the position depicted in Figure 2. During the collapsing movement of the outer end of the sleeve 11, the dogleg 58 will be similarly collapsed to the position depicted in Figure 2 where the intersection surface 62 will be in tight engagement with the outer periphery of the tube 15 and somewhat slightly embedded therein. The degree of embedment of the intersection surface 62 into the surface of the tube 15 will depend upon the relative hardness of the sleeve 11 and the tube 15, the degree of curvature of the intersection surface 62, the shape and configuration of the forward conical section 60 and the rear conical section 59 of the sleeve 11, and further considerations. However, in any event, the rear wall 52 of the groove 50 will be deformed a few degrees toward a more nearly vertical position as depicted in Figure 2. In the final assembled condition shown in Figure 2, the rear wall 52 completely closes the rearward end of the groove 50 preventing extrusion of the seal 55 rearwardly of the groove 50 under high fluid pressures encountered in the bore 16 of the body member 14.

Also, as shown in Figure 2, the stop shoulder 29 of the nut 12 has engaged the rear shoulder 38 of the sleeve 11 positively to limit further threaded engagement between the nut 12 and the body member 14 thereby controlling the depth of penetration of the first and second bite edges 44, 45 into the tube 15 as well as controlling the depth of embedment of the dogleg intersection surface 62 into the tube 15.

In a typical fitting 10 designed for a 12.7mm (0.5 inch) diameter tube, the sleeve 11 may be of 12.7mm (0.5 inch) overall axial length and 19mm (0.75 inch) diameter. The intersection 62 is disposed initially just rearwardly of the rear shoulder 38 and after deformation may be close to alignment with the shoulder 38. The rear conical section 59 of the dogleg 58 extends rearwardly for approximately 3.8mm (0.15 inch) to a junction with the conical section 40 of the sleeve 11, approximately in alignment with the forward bite edge 45. The bite edge 45 in turn is spaced about 5.1mm (0.2 inch) from the rear end of the sleeve 11. Thus, it will be apparent that the rear conical section 59 of the dogleg 58 forms a relatively long lever to control deformation of the intersection 62 and ensure firm engagement with the tube 15.

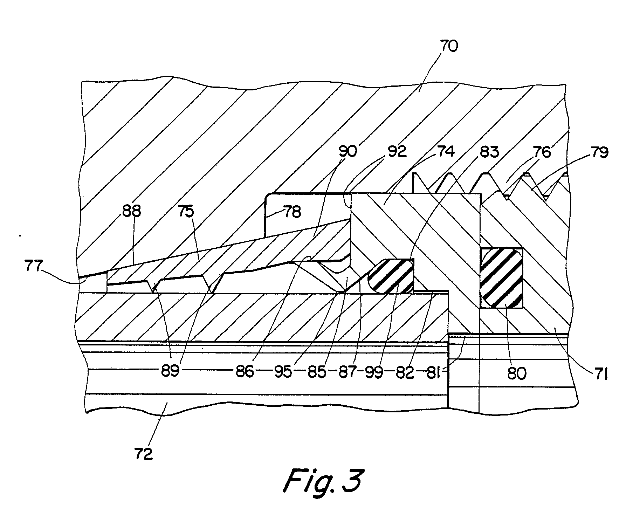

A second embodiment depicted in Figure 3 comprises a nut 70, body member 71, tube 72 and forward and rear sleeve sections 74, 75. In a manner similar to that shown in the first described embodiment, the nut 70 includes internal threads 76 at the forward end thereof, a conical cam surface 77 at the rearward end and an intermediate stop shoulder 78. The body member 71 includes external threads 79 and a face seal 80 located in an annular groove at a perpendicular seal face thereof.

The forward sleeve section 74 includes a central bore 81, a counterbore 82 and a groove 83, and terminates in a rearwardly extending dogleg section 85 in a configuration similar to that described with respect to the first embodiment. However, the dogleg section 85 terminates at a generally cylindrical terminal surface 86. The forward part of the dogleg 85 comprises a rear wall 87 of the groove 83 in a manner similar to that described with respect to the first embodiment. The rear sleeve section 75 comprises an outer conical cam surface 88 and a plurality of internal annular cutting edges 89 at the rear end together with an extension 90 at the forward end. The forward extension 90 is generally cylindrical in configuration and has an internal cylindrical periphery sized to be a press fit on the dogleg end surface 92 of the forward sleeve section 74.

It will be apparent in this embodiment that a similar deformation of the sleeve sections 74, 75 occurs as that previously described. That is, as the nut 70 is threaded onto the body member 71, the cam surface 77 will move axially relative to the cam surface 88 of the sleeve section 75 causing radial collapse of the sleeve section 75 and penetration of the cutting edges 89 into the surface of the tube 72. Collapse of the rear sleeve section 75 will cause collapse of the forward extension 90 with a consequent collapse of the dogleg section 85 until an intersection surface 95 of the dogleg 85 is firmly engaged or embedded into the outer periphery of the tube 72. In this manner, the groove 83 of the forward sleeve section 74 will be completely closed by the rear wall 87 to prevent rearward extrusion of an elastomeric o-ring seal 99 located therein. Since the forward end of the rear sleeve section 75 is free, it may collapse to a lesser degree than the rear end to provide a measure of accommodation for the tolerances of the tube 72 and the components of this fitting.

## Claims

1. A fitting to join a thin wall tube (15, 72) to a threaded body member (14, 71) having an axial bore (16) therein, comprising
a nut (12, 70) having threads (31, 76) thereon disposed at the forward end thereof for engagement with the threads (20, 79) of the body member (14, 71) to draw the nut and body member axially together,

a bore (26) in the nut (12, 70) to receive the tube (15, 72), a conical surface (28, 77) in the nut adjacent the rear end thereof and opening forwardly,

a recessed surface (30) in the nut forwardly of the conical surface (28, 77),

a sleeve (11, 74, 75) for placement on the tube, the sleeve (11, 74, 75) having a conical exterior surface (41, 88) at the rearward end thereof received in the conical surface (28, 77) of the nut and to be collapsed onto the tube upon threaded engagement of the nut on the body member, and bite means (44, 45, 89) at the rearward end of the sleeve for biting engagement with the tube to restrain rearward movement of the tube,

characterised by an annular head (39, 74) at the forward end of the sleeve in engagement with the body member (14, 71), an internal annular recess (50, 83) in the sleeve head (39, 74),

a seal (55, 99) disposed in the sleeve recess and engageable with the external periphery of the tube, and

a dogleg (58, 85) in the sleeve between the conical surface (41, 88) and the head (39, 74), the dogleg (58, 85) being deformable into engagement with the peripheral surface of the tube as the nut is threaded upon the body member, to prevent extrusion of the seal (55, 99) rearwardly of the dogleg (58, 85).

2. A fitting according to claim 1, wherein the dogleg comprises a rearwardly opening conical sleeve section (59) integral with the annular head (39, 74).

3. A fitting according to claim 1 or claim 2, wherein the dogleg includes a forwardly opening conical sleeve section (60) integral with the annular head (39, 74), the forwardly opening conical sleeve section forming the rearward wall of the annular recess (50, 83) in the sleeve head (39, 74).

4. A fitting according to any one of claims 1 to 3, wherein the annular head (39, 74) includes stop means (36, 38, 92) thereon to limit relative axial movement between the nut and the body member thereby limiting penetration of the bite means (44, 45, 89).

5. A fitting according to claim 4, wherein the stop means comprises front (36) and rear (38, 92) shoulders on the annular head engageable respectively with the body member and the nut.

6. A fitting according to claim 5, wherein the stop shoulders (36, 38, 92) are generally perpendicular to the axis (18) of the fitting.

7. A fitting according to claim 6, wherein the nut includes a perpendicular stop shoulder (29, 78) at the rearward end of the recessed surface (30) engageable with the rear shoulder (38, 92) of the sleeve (11, 74, 75).

8. A fitting according to claim 3, further comprising seal means (22, 80) disposed between the annular head of the sleeve and the body member.

9. A fitting according to claim 8, wherein the annular head includes a generally perpendicular front shoulder (36) and the seal means comprises a face seal (22, 80) disposed between the front shoulder (36) and the body member (14, 71).

10. A fitting according to claim 9, wherein the body member (14, 71) includes a generally perpendicular rear face thereon and the face seal is an annular elastomeric seal (22, 80) disposed in an annular groove in the rear face of the body member.

11. A fitting according to claim 10, wherein the annular head includes stop means (36, 38, 92) thereon to limit axial movement of the nut.

12. A fitting according to claim 11, wherein the nut includes a stop shoulder (29, 78) thereon engageable with the stop means (38, 92) of the annular head (39, 74).

13. A fitting according to any one of claims 1 to 12, wherein the sleeve comprises separate front (74) and rear (75) sections, the annular head and the dogleg (85) being included on the front section (74).

14. A fitting to attach a tube (15, 72) to a threaded body member (14, 71) having a central axis and a flat seal face substantially perpendicular to the axis, characterised by

a sleeve (11, 74, 75) having a front shoulder (36) thereon substantially perpendicular to the axis and engageable with the seal face of the body member,

a face seal (22, 80) disposed in a groove in the seal face to seal against the shoulder,

a bore (35) in the sleeve shoulder (35) to receive the end of the tube (15, 72) to be attached to the body member,

a rear shoulder (38, 92) on the sleeve spaced rearwardly of the front shoulder (36),

an inner annular groove (50, 83) in the sleeve between the shoulders, the groove having a front wall (51) and a collapsible rear wall (52, 87), the rear wall being sized initially freely to receive the tube and to be substantially radially collapsed into tight engagement with the tube, an annular elastomeric seal (55, 99) in the groove (50, 83), a rear section (40, 75) on the sleeve having an external conical surface (41, 88) thereon,

gripping means (44, 45, 89) on the sleeve rear section internally of the conical surface (41, 88), the rear section (40, 75) of the sleeve being collapsible onto the tube, means (58, 85) joining the rear section (40, 75) and the rear wall (52, 87) of the groove to transmit collapsing movement of the rear section of the sleeve to the rear wall, and a nut (12, 70) threaded onto the body member to secure the tube to the body member, the nut having an internal conical surface (28, 77) at the rearward end thereof engageable with the sleeve conical surface (41, 88) to collapse the rear section (40, 75) of the sleeve and the rear wall (52, 87) of the groove as the nut is threaded on the body member and axially moved relative theretowards.

15. A fitting according to claim 14, wherein the nut further comprises a stop shoulder (29, 78) engageable with the rear shoulder (38, 92) of the sleeve to limit relative axial movement of the nut towards the body member.

16. A fitting according to claim 15, wherein the stop shoulder (29, 78) and the rear shoulder (38, 92) are substantially perpendicular to the central axis.

17. A fitting according to claim 16, wherein the means joining the rear section (40, 75) and the rear wall (54, 87) is a tapered wall section (59) of substantially uniform thickness and having a conical rearward outward flare.

18. A fitting according to claim 17, wherein the tapered wall section (59) is integral with the rear section (40) and the rear wall (52) of the groove.

19. A fitting according to claim 17, wherein the tapered wall section is integral with the rear wall (87) of the groove (83) and terminates between the rear wall and the rear section (75) and the rear section (75) overlaps the conical wall section.

20. A fitting according to claim 19, wherein the front end of the rear section (75) of the sleeve extends over the conical wall section and into engagement with the rear shoulder (92) of the front section (74).

Fig. 1

Fig. 2

Fig. 3

## DOCUMENTS CONSIDERED TO BE RELEVANT

EP 88308665.4

| Category | Citation of document with indication, where appropriate, of relevant passages | Relevant to claim | CLASSIFICATION OF THE APPLICATION (Int. Cl.4) |
|---|---|---|---|
| Y | FR - A1 -2 395 451 (ERMETO) <br> * Totality * <br> -- | 1 | F 16 L 19/08 <br> F 16 L 17/02 <br> F 16 L 15/04 |
| D,Y | US - A - 4 529 231 (GREENAWALT) <br> * Totality * | 1 | |
| A | * Totality * <br> ---- | 4,5,7-11,14,15 | |

**TECHNICAL FIELDS SEARCHED (Int. Cl.4)**

F 16 L 15/00

F 16 L 17/00

F 16 L 19/00

The present search report has been drawn up for all claims

| Place of search | Date of completion of the search | Examiner |
|---|---|---|
| VIENNA | 20-12-1988 | SCHUGANICH |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03 82